# EUROPEAN PATENT SPECIFICATION

(11) **EP 1 491 608 B1**
(45) Date of publication and mention of the grant of the patent: **14.01.2009**
(21) Application number: 04014512.0
(22) Date of filing: 21.06.2004
(51) Int. Cl.: C09K 5/04

(54) **Refrigerant mixture and refrigeration cycle apparatus using the same**
Kühlmittelmischung und Kältekreislaufgerät, die diese verwendet
Mélange réfrigérant et appareil à cycle frigorifique l'utilisant

(30) Priority: 26.06.2003 JP 2003182316
(43) Date of publication of application: 29.12.2004
(60) Divisional application: 05025562.9
(73) Proprietor: Panasonic Corporation, Kadoma-shi Osaka 571-8501 (JP)
(72) Inventor: Fujitaka, Akira, Otsu-shi Shiga 520-2144 (JP)
(74) Representative: Körfer, Thomas

(56) References cited:
- EP-A- 0 992 572
- EP-A- 1 234 868
- US-A- 5 360 566
- KIM S G ET AL: "Experiment and simulation on the performance of an autocascade refrigeration system using carbon dioxide as a refrigerant" INTERNATIONAL JOURNAL OF REFRIGERATION, OXFORD, GB, vol. 25, no. 8, December 2002 (2002-12), pages 1093-1101, XP004388591 ISSN: 0140-7007
- MCLINDEN M O ET AL: "Thermodynamic properties for the alternative refrigerants" INTERNATIONAL JOURNAL OF REFRIGERATION, OXFORD, GB, vol. 21, no. 4, June 1998 (1998-06), pages 322-338, XP004287254 ISSN: 0140-7007
- HOSHINA K ET AL: "Lorentz angle measurement for CO2/isobutane gas mixtures" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 479, no. 2-3, 1 March 2002 (2002-03-01), pages 278-293, XP004344547 ISSN: 0168-9002

## Description

### Technical Field

The present invention relates to a refrigerant mixture comprising specific hydrocarbon and carbon dioxide, and to a refrigeration cycle apparatus using the refrigerant mixture.

### Background Technique

In a refrigeration cycle apparatus, in general, a compressor, a condenser, an expansion device such as a capillary tube and an expansion valve, an evaporator are connected to one another through pipes to constitute a refrigeration cycle, and refrigerant is allowed to circulate through the pipes, thereby carrying out a cooling or heating operation. As a refrigerant used in such a refrigeration cycle apparatus, hydrocarbon halide induced from methane or ethane is known. For convenience in writing, the refrigerant is expressed with a letter "R" followed by two- or three-digit numerals in accordance with ASHRAE STANDARD 34.

As a refrigerant for the refrigeration cycle apparatus, there is used a refrigerant mixture (R410A, hereinafter) of difluoromethane (R32, hereinafter) having a molecular formula of CH2F2 and a boiling point of -51.7°C, and pentafluoroethane (R125, hereinafter) having a molecular formula of C2HF5 and a boiling point of -48.1°C. This R410A is a fluorocarbon-based refrigerant mixture in which chlorine is not included but hydrogen is included in its molecular structure (HFC refrigerant, hereinafter). The R410A is used as an alternative refrigerant of a fluorocarbon-based refrigerant including chlorine in its molecular structure (HCFC, hereinafter). The hidroclorofluorocarbon, e.g. , HCFC refrigerant such as R22 has a depleting ability of ozone layer in the stratosphere, and its using amount and its production amount are restricted by the international regulation (i.e. Montreal Protocol concerning the Ozone Depleting Substances). But the HFC refrigerant has a problem that its global warming potential (GWP, hereinafter) is high.

As a natural refrigerant having low GWP which shows an adverse influence for global warming which is another problem of global environment problem, a carbon dioxide (R744, hereinafter) is used as a refrigerant for a heat pump water heater which supplies hot water. The R744 has molecular formula of CO2, a triple point of -56.6°C and a critical temperature of 31.1°C.

In a refrigeration cycle apparatus using R744, the refrigeration cycle can be a trans-critical cycle in which condensation process is not included. A discharging pressure in a compressor of the refrigeration cycle apparatus is increased to about three times of 4.2MPa which is a general set pressure (saturation pressure at 65°C) when R410A is used in an air conditioner, and the compressor discharging temperature is also prone to rise, and there is a problem that a pressure resistance of a refrigeration cycle part must be enhanced as compared with devices using R410A, the reliability of an insulative material of a compressor motor and a lubricant for a compressor must be enhanced.

The main purpose of the study in KIM S G ET AL: "experiment and simulation on the performance of an autocascade refrigeration system using carbon dioxide as a refrigerant" INTERNATIONAL JOURNAL OF REFRIGERATION, OXFORD, GB, vol. 25, no. 8, December 2002 (2002-12), pages 1093-1101 is to investigate the performance of an autocascade refrigeration system using zeotropic refrigerant mixtures of R744/134a and R744/290. One of the advantages of this system is the possibility of keeping the highest pressure of the system within a limit by selecting the composition of a refrigerant mixture as compared to that in the vapor compression system using pure carbon dioxide. Performance test and simulation have been carried out for an autocascade refrigeration system by varying secondary fluid temperatures at evaporator and condenser inlets. Variations of mass flow rate of refrigerant, compressor power, refrigeration capacity, and coefficient of performance, COP, with respect to the mass fraction of R744 in R744/134a and R744/290 mixtures are presented at different operating conditions. Experimental results show similar trends with those from the simulation. As the composition of R744 in the refrigerant mixture increases, cooling capacity is enhanced, but COP tends to decrease while the system pressure rises.

In MCLINDEN M O ET AL: "Thermodynamic properties for the alternative refrigerant" INTERNATIONAL JOURNAL OF REFRIGERATION, OXFORD, GB, vol. 21, no. 4, June 1998 (1998-06), pages 322-338 models commonly used to calculate thermodynamic properties of refrigerants are summarized. For pure refrigerants, the virial, cubic, Martin-Hou, Benedict-Webb-Rubin, and Helmholtz energy equations of state and the extended corresponding states model are discussed. High-accuracy formulations for 16 refrigerants are recommended. These models may be extended to mixtures through the use of mixing rules applied either to the parameters of the equation of state or to some property of the mixture components. Mixtures of a specific composition may also be modeled as a pseudo-pure fluid. Five mixture models, employing four distinct approaches, have been compared by a group working under the auspices of the International Energy Agency. These comparisons show all five models to be very capable in representing mixture properties. No single model was best in all aspects, but based on its combination of excellent accuracy and great generality, the mixture Helmholtz energy model was recommended as the best available.
MCLINDEN M O ET AL also presents a survey of the data available for mixtures of the HFC refrigerants R32, R125, R143a, R134a, and R152a and for mixtures of the natural refrigerants propane, butane, isobutane, and carbon dioxide. More than 60 data references are identified. Further data needs include caloric data for additional mixtures, comprehensive pressure density-temperature data for additional mixture compositions, and improved accuracy for vapor-liquid equilibria data.

EP-A-0 992 572 discloses a refrigerating machine oil for use with a CO2 refrigerant which comprises an ester oil. The refrigerating machine oils have an excellent lubricity, miscibility with a refrigerant, stability and electric insulation.

HOSHINA K ET AL: "Lorentz angle measurement for CO2/isobutane gas mixtures" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 479, no. 2-3, 1 March 2002 (2002-03-01), pages 278-293 have developed a Lorentz angle measurement system for cool gas mixtures for a proposed JLC central drift chamber. The measurement system is characterized by the use of two laser beams to produce primary electrons and flash ADCs to read their signals simultaneously. With the system Lorentz angles for CO2/isobutane gas mixtures with different proportions 95:5, 90:10, and 85:15, varying drift field from 0.6 to 2.0 kV/cm and magnetic field up to 1.5T were measured. The results of the measurement are in good agreement with GARFIELD/MAGBOLTZ simulations.

EP-A-1 234 868 discloses a refrigerating oil composition for a carbon dioxide refrigerant which comprises as a main component a mixture comprising a polyvinyl ether having a kinematic viscosity of 3 to 50 mm²/s at 100°C in an amount exceeding 40% by weight and of 99.1% by weight or less and a polyoxyalkylene glycol having a kinematic viscosity of 3 to 50 mm²/s at 100°C in an amount of 0.1% by weight or more and less than 40% by weight. The composition exhibits an excellent lubricating property and a great viscosity index even when a carbon dioxide refrigerant.is used. The composition exhibits excellent stability and an excellent lubricating property under the atmosphere of carbon dioxide in the supercritical condition while the above advantageous properties are maintained and can be used for a long period of time.

In view of the problem of the HFC refrigerant and R744 refrigerant and previous publications, it is an object of the present invention to provide an alternative refrigerant having excellent characteristics which can be used in an apparatus having a pressure resistance such as an air conditioner using R410A. It is another object of the invention to provide a refrigeration cycle apparatus using a refrigerant mixture of HC refrigerant and R744 and capable of lowering the compressor discharging temperature.

### Disclosure of the Invention

To achieve the above object, the present invention provides a refrigerant mixture, characterized in that the refrigerant mixture comprises isobutane and R744, the concentration of R744 in the entire refrigerant mixture is 60% or lower by weight.

In each of the above refrigerant mixtures, a leakage detecting additive of odorant or coloring agent is added.

The invention also provides a refrigeration cycle apparatus using the above refrigerant mixture.

In the refrigeration cycle apparatus of the invention, a compressor, a condenser, an expansion device and an evaporator are connected to one another in an annular form to form a refrigeration cycle, the refrigerant and a fluid, i.e. water, are allowed to flow such that they are opposed to each other in the condenser, thereby exchanging heat.

In the refrigeration cycle apparatus, a gas-liquid separator is provided between an outlet of the expansion device and an inlet of the evaporator, the refrigerant mixture is separated by the gas-liquid separator into a gas phase refrigerant mixture and a liquid phase refrigerant mixture, a pipe of the gas-liquid separator is connected to the evaporator such that the liquid phase refrigerant mixture flows into the evaporator, and a pipe of the gas-liquid separator is connected to a suction line of the compressor such that the gas phase refrigerant mixture flows into the suction line of the compressor.

In the refrigeration cycle apparatus, a lubricant which is solved into the refrigerant mixture under an operation condition of the compressor and which has viscosity of 2 cm stokes or higher is used as a lubricant to be charged into the compressor.

In the refrigeration cycle apparatus, a low pressure shell type compressor is used as the compressor.

### Brief Description of the Drawings

Fig. 1 shows characteristics of an embodiment of refrigerants according to an embodiment of the present invention;
Fig. 2 is a circuit diagram of an embodiment of a refrigeration cycle apparatus using a refrigerant of the present invention;
Fig. 3 shows characteristics of variation of condensed refrigerant temperature and water temperature of a refrigeration cycle apparatus using a refrigerant of the present invention; and
Fig. 4 is a circuit diagram showing another embodiment of the refrigeration cycle apparatus using the refrigerant of the invention.

### Detailed Description of Preferred Embodiments

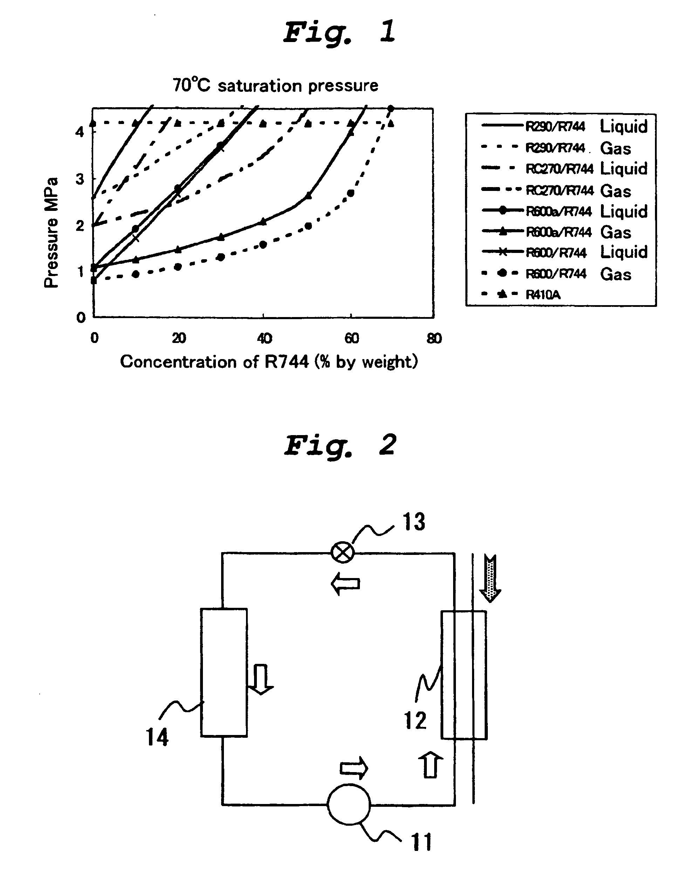

Concrete embodiments of the present invention will be explained using Figs. 1 to 4.

### (Embodiment 1)

Fig. 1 shows gas-liquid equilibrium characteristics of a refrigerant mixture of R744 andHC refrigerant at 70°C. Examples of HC refrigerants are propane (R290) having a molecular formula of CH3-CH2-CH3, a boiling point of -42.1°C and a critical temperature of 96.7°C; cyclopropane (RC270, hereinafter) having a molecular formula of C3H6, a boiling point of -32.9°C and a critical temperature of 125.2°C; isobutane (R600a, hereinafter) having a molecular formula of i-C4H8, a boiling point of -11.7°C and a critical temperature of 134.7°C; and butane (R600, hereinafter) having a molecular formula of n-C4H8, a boiling point of -.0.5°C and a critical temperature of 152.0°C.

It can be found from Fig. 1 that R290, RC270, R600a, R600 and the like which are HC refrigerants and R744 constitute a non-azeotropic refrigerant mixture. It can be found from Fig. 1 that as compared with 4.2MPa which is a general design pressure (saturation pressure of 65°C) when R410A is used for an air conditioner, a saturation pressure of a refrigerant mixture of R290 and R744 becomes equal to the designed pressure when the concentration of R744 is about 30% by weight or lower, a saturation pressure of a refrigerant mixture of R270 and R744 becomes equal to the designed pressure when the concentration of R744 is about 40% by weight or lower, a saturation pressure of a refrigerant mixture of R600a and R744 becomes equal to the designed pressure when the concentration of R744 is about 60% by weight or lower, and a saturation pressure of a refrigerant mixture of R600 and R744 becomes equal to the designed pressure when the concentration of R744 is about 70% by weight or lower,

That is, when the concentration of R744 is equal to or lower than the above value, the saturation pressure of the refrigerant mixture becomes equal to or lower than 4. 2MPa which is a general design pressure (saturation pressure of 65°C) when R410A is used for an air conditioner. Therefore, the refrigerant mixture can be used for a refrigeration apparatus using R410A and having same pressure resistance as R410A.

As can be found from Fig. 1 showing the characteristic curves, it is preferable that in the case of the refrigerant mixture comprising R290 and R744, the concentration of R744 is 15% by weight or lower, and in the cases of the refrigerant mixtures respectively comprising RC270 and R744; R600a and R744; and R600 and R744, the concentration of R744 is 30% by weight or lower.

A critical temperature of HC refrigerant such as R290, RC270, R600a and R600 is higher than that of R744. Therefore, a critical temperature of a non-azeotropic refrigerant mixture in which HC refrigerant is mixed is equal to or higher than that of R744. Thus, in a refrigeration cycle using R744, the cycle can become a trans- critical cycle which does not include a condensation process, but in a refrigeration cycle using non-azeotropic refrigerant mixture in which HC refrigerant is mixed, subcritical cycle including a condensation process can be established depending upon a temperature condition.

The non-azeotropic refrigerant mixture comprising HC refrigerant and R744 shows excellent characteristics when it is used as a refrigerant for a refrigeration cycle apparatus, and this refrigerant mixture can solve the problem of the device.

If the refrigerant mixture including R744 and HC refrigerant which is natural refrigerant is used for the refrigeration cycle apparatus, it is possible to eliminate the adverse influence acting on the ozone layer in the stratosphere. Further, since this refrigerant mixture includes only R744 and HC refrigerant, and a GWP value of R744 is 1, and a GWP value of HC refrigerant is less than 10, the refrigerant mixture has little effect on global warming. It is preferable that the upper limit of the concentration (% by weight) of the natural HC refrigerant is as specified by claims.

Even if a very small amount of odorant mainly having methyl mercaptan, tetrahydrothiophene, ammonia or the like; coloring agent mainly having azoic pigment, fluorescent dye, fluorescent pigment or the like, as a leakage detecting additive; or dissolve additive of odorant, dissolve additive of coloring agent or the like is added to HC refrigerant such as R290, RC270, R600a or R600, the effect can be exhibited with a very small amount on the order of ppm.

### (Embodiment 2)

Fig. 2 shows a schematic block diagram of the refrigeration cycle apparatus according to the embodiment 2 of this invention. In Fig. 2, a compressor 11, a condenser 12, an expansion device 13 and an evaporator 14 are connected to one another through pipes to form a closed-circuit. In the condenser 12, water and a refrigerant mixture flow such that they are opposed to each other to exchange heat, thereby constituting a heat pump water heater. A refrigerant mixture comprising HC refrigerant and R744 having non-azeotropic properties is charged as a refrigerant.

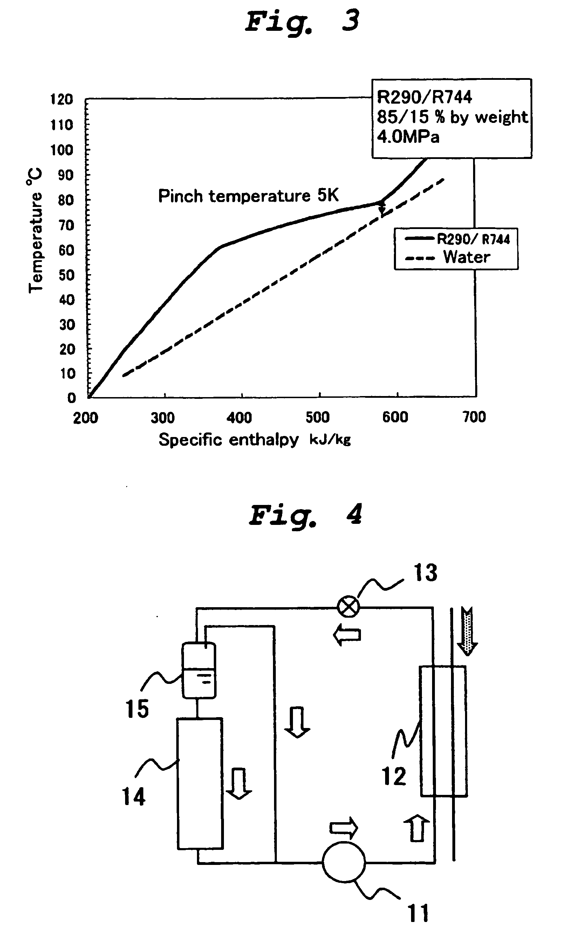

Fig. 3 shows variations in refrigerant temperature and water temperature of the condenser when it is operated under a condition that 85% R290 by weight and 15% R744 by weight are charged into the refrigeration cycle apparatus of the present invention. Here, the pressure of the condensed refrigerant is controlled such that the water temperature at the outlet of the condenser becomes 90° under a condition that the water supply temperature is 10°C, the pinch temperature of the condenser between the refrigerant temperature and the water temperature is 5 degrees, the refrigerant temperature at the outlet of the condenser is 19°C, and the average evaporation temperature of the evaporator is 2°C. As a result, the water temperature can be heated to 90°C under the condensed refrigerant pressure of 4.2MPa.

In Table 1, heating performance is compared among single refrigerants of R290 and R744 using the following refrigerant mixtures 1) to 4) in the heat pump water heater: 1) a refrigerant mixture of R290 and R744, and R744 is in a range of 0% to 20% by weight is included (when R744 is 0% by weight, this refrigerant is propane single refrigerant); 2) a refrigerant mixture comprising RC270 and R744; 3) a refrigerant mixture comprising R600a and R744; and 4) a refrigerant mixture comprising R600 and R744 wherein the concentration of R744 is 30% by weight.

**Table 1**

| Refrigerant | R290/R744 | | | | | | RC270 /R744 | R600a /R744 | R600 /R744 |
|---|---|---|---|---|---|---|---|---|---|
| | R290 | | | | | R744 | | | |
| Concentration % by weight | 100/0 | 95/5 | 90/10 | 85/15 | 80/20 | 0/100 | 70/30 | 70/30 | 70/30 |
| COP | 3.66 | 3.8 | 3.78 | 3.75 | 3.7 | 3.76 | 3.68 | 3.73 | 4.07 |
| Pd MPa | 3.3 | 3.6 | 3.8 | 4 | 4.3 | 12.2 | 4.2 | 2.5 | 2 |
| Ps MPa | 0.5 | 0.65 | 0.7 | 0.77 | 0.85 | 3.76 | 0.72 | 0.49 | 0.35 |
| Td °C | 103 | 104 | 105 | 105 | 106 | 107 | 107 | 108 | 109 |
| Pd/Ps | 6.6 | 5.5 | 5.4 | 5.2 | 5.1 | 3.2 | 5.8 | 5.1 | 5.7 |
| Tcave °C | 82.8 | 77.2 | 72.9 | 69.5 | 68 | - | 67 | 65 | 60.2 |
| ΔTc deg | 0 | 10.1 | 14.9 | 17.6 | 18.3 | - | 25.5 | 41.2 | 55.8 |

As apparent Table 1, if the concentration of R744 is set in the following ranges, it is possible to supply water of 90°C at a discharging pressure of the compressor less than 4.2MPa which is a general set pressure (saturation pressure of 65°C) when R410A is used for an air conditioner. That is, the concentration of R744 is: 15% by weight or lower in the case of the refrigerant mixture comprising R290 and R744; and 30% byweight or lower in the case of the refrigerant mixture comprising RC270 and R744, the refrigerant mixture comprising R600a and R744, and the refrigerant mixture comprising R600 and R744.

In the case of a single refrigerant of R290 and a refrigerant mixture of R290 and R744, although the condensing pressure (Pd) is increased as the concentration of R744 is increased, these refrigerants show coefficient of performance (COP) which is equal to or higher than those of R290 and R744.

The condensation temperature gradient (ΔTc) in Table 1 is a feature of the non-azeotropic refrigerant mixture, and at this gradient shows a temperature variation when a refrigerant is condensed by the condenser under a constant pressure. Since the refrigerant mixture of R290 and R744 has non-azeotropic properties, the condensation temperature gradient is as high as 17.6 degrees when the concentration of R744 is 15% by weight. In a cycle of a water heater in which water and refrigerant flow such that they are opposed to each other in the condenser to exchange heat, the average condensation temperature is lowered, the compression ratio is lowered, and performance is enhanced. The same effect can be obtained also when other HC refrigerant such as RC270, R600a, R600 is mixed. When HC refrigerant and R744 are mixed and they are used in a refrigeration cycle apparatus, performance can be enhanced.

It can be found from Table 1 that the discharge temperature lowering effect of R290 is higher as the concentration of R290 is higher, and that when the concentration of R744 is 15% by weight and the concentration of R290 is 85% byweight, the discharge temperature is lowered by about 2 degrees as compared with a single refrigerant of R744. When the refrigerant mixture of HC refrigerant and R744 is used as a refrigerant for a refrigeration cycle apparatus, excellent characteristics are exhibited.

### (Embodiment 3)

Fig. 4 is a schematic block diagram of a refrigeration cycle apparatus according to an embodiment 3 of the present invention. In Fig. 4, the compressor 11, the condenser 12, the expansion device 13, a gas-liquid separator 15 and the evaporator 14 are connected to one another through pipes to form a closed-circuit. In this refrigeration cycle, a refrigerant circulates in a direction of the arrow. A refrigerant mixture having HC refrigerant and R744 having non-azeotropic properties is charged into the refrigeration cycle as a refrigerant.

In the gas-liquid separator 15, the pipe thereof is connected to the evaporator 14 such that a gas phase refrigerant and a liquid phase refrigerant of the refrigerant mixture are separated from each other and the liquid phase refrigerant flows into the evaporator 14, and the pipe of the pipe of the gas-liquid separator 15 is connected to a suction line of the compressor 11 such that the gas phase refrigerant flows into the suction line of the compressor 11.

Here, since the non-azeotropic properties of the HC refrigerant and R744 are high, the gas phase refrigerant separated by the gas-liquid separator 15 becomes a refrigerant having high concentration of R744 having low boiling point, and the liquid phase refrigerant becomes a refrigerant having high concentration of HC refrigerant having high boiling point. Since a refrigerant mixture having higher concentration than that of the charged HC refrigerant flows into the evaporator 14, the non-azeotropic properties become smaller, and the temperature gradient also becomes smaller. As a result, a difference between the inlet refrigerant temperature and the outlet refrigerant temperature of the evaporator becomes smaller. When the outside temperature is low, the temperature of the refrigerant mixture of the evaporator becomes 0°C or lower, and frost is formed on a fin portion having temperature of 0°C or lower. However, since gas and liquid of the refrigerant mixture are separated from each other by the gas-liquid separator and the difference between the inlet refrigerant temperature and the outlet refrigerant temperature of the evaporator can be lowered, it is possible to prevent frost from being partially formed on the evaporator.

If HC refrigerant and R744 refrigerant mixture coexist, since HC refrigerant is selectively dissolved into the lubricant in an operation state, the lubricant for the compressor 11 may be a lubricant having an insoluble region with respect to R744 in an operation condition of the compressor 11, and it becomes easy to select the lubricant and to manage the viscosity. It is known that solubility between R744 and various lubricants becomes insoluble not only at a low temperature but also at a high temperature. If HC refrigerant is allowed to selectively be solved in a lubricant in the compressor 11, the lubricant discharged from the compressor 11 can easily return to the compressor 11, the amount of the lubricant in the compressor 11 can sufficiently be maintained, and the reliability of the compressor 11 can be enhanced.

Viscosity indices of lubricants having viscosity grade of 5 cm stokes or higher at 100°C are varied depending upon the kinds of lubricants, but such lubricants have viscosity grade of 50 cm stokes at 40°C. If a lubricant having viscosity grade of 5 cm stokes of higher at 100°C and a refrigerant mixture having HC refrigerant and R744 coexist, HC refrigerant is selectively solved in the lubricant in a compressor operation state, and the viscosity of lubricant is lowered.

That is, even if the HC refrigerant is selectively solved in the lubricant and the viscosity of the lubricant is lowered, if a lubricant having viscosity grade of 2 cm stokes or higher is selected, the reliability is enhanced.

Further, even with a lubricant in which the refrigerant mixture having HC refrigerant and R744 is not solved at all or partially solved, if a lubricant having viscosity grade of 2 cm stokes or higher in the compressor operation state is selected, the reliability is enhanced.

The upper limit of the viscosity grade is not especially limited, but an appropriate upper limit is 20 cm stokes or lower at 100°C because electric consumption caused by sliding friction is prevented from being increased. As a lubricant, the following base oil may be used alone or in combination: naphthene-base, paraffin-base mineral oil, alkylbenzene oil, ether oil, ester oil, pollyalkylene glycol oil, carbonate oil and the like.

When a low pressure sell type compressor is used as the compressor 11 used in the embodiments of the present invention, since the lubricant comes into contact with a low pressure refrigerant of the refrigeration cycle, the amount of refrigerant solved into the lubricant can be reduced to an extremely small value and thus, the amount of refrigerant including hydrocarbon which is flammable refrigerant can be reduced, and safety of the apparatus can be enhanced.

According to the present invention, the refrigerant mixture comprises R600a and R744. The concentration of R744 is 60% or lower by weight and is more preferably 30% or lower by weight. With this refrigerant mixture, adverse influences acting on ozone layer in the stratosphere and on global warming can be eliminated almost at all, high pressure can be reduced, and a part for an air conditioner using R410A can be used.

Further, according to the present invention, the non-azeotropic properties of the refrigerant mixture is enhanced by mixing HC refrigerant and R744, and when this is used in a refrigeration cycle apparatus such as a heat pump water heater, the coefficient of performance can be made higher than that of a single refrigerant of HC refrigerant.

Further, according to the present invention, since HC refrigerant and R744 are mixed, when it is used in a refrigeration cycle apparatus, the discharging temperature in the compressor can be lowered than R744.

Further, according to the present invention, since HC refrigerant is solved in the compressor lubricant, it is possible to secure an oil return of the compressor lubricant which coexists with R744 into the compressor.

Further, according to the present invention, since a lubricant having viscosity grade of 2 cm stokes or higher in a compressor operation state is selected, the reliability is enhanced.

Further, according to the present invention, since a low pressure shell type compressor is used as a compressor, the amount of HC refrigerant solved into a lubricant can be reduced, and a charging amount of refrigerant into a refrigeration cycle can be reduced.

## Claims

1. A refrigerant mixture, **characterized in that** said refrigerant mixture comprises isobutane and carbon dioxide, the concentration of carbon dioxide in the entire refrigerant mixture is 60% or lower by weight, and the concentration of isobutane in the entire refrigerant mixture is remaining % by weight obtained by subtracting said the concentration of carbon dioxide from said refrigerant mixture.

2. The refrigerant mixture according to claim 1 , **characterized in that** a leakage detecting additive of odorant or coloring agent is added to the refrigerant mixture.

3. A refrigeration cycle apparatus using the refrigerant mixture according to claim 1 or 2.

4. The refrigeration cycle apparatus according to claim 3, **characterized in that** a compressor, a condenser, an expansion device and an evaporator are connected to one another in an annular form to form a refrigeration cycle, a refrigerant mixture flowing through said condenser and a non-heated fluid are allowed to flow such that they are opposed to each other, thereby exchanging heat.

5. The refrigeration cycle apparatus according to claim 4, **characterized in that** a gas-liquid separator is provided between an outlet of said expansion device and an inlet of said evaporator, said refrigerant mixture is separated by said gas-liquid separator into a gas phase refrigerant mixture and a liquid phase refrigerant mixture, a pipe of said gas-liquid separator is connected to said evaporator such that said liquid phase refrigerant mixture flows into said evaporator, and a pipe of said gas-liquid separator is connected to a suction line of said compressor such that said gas phase refrigerant mixture flows into said suction line of said compressor.

6. The refrigeration cycle apparatus according to claims 4 or 5, **characterized in that** a lubricant which is solved into said refrigerant mixture under an operation condition of said compressor and which has viscosity of 2 cm stokes or higher is used as a lubricant to be charged into said compressor.

7. The refrigeration cycle apparatus according to claims 4 or 5, **characterized in that** a low pressure shell type compressor is used as said compressor.

## Patentansprüche

1. Kühlmittelmischung, **dadurch gekennzeichnet, dass** die Kühlmittelmischung Isobutan und Kohlendioxid umfasst, wobei die Konzentration des Kohlendioxids in der Gesamtkühlmittelmischung 60 Gewichts-% oder weniger beträgt und die Konzentration des Isobutans in der Gesamtkühlmittelmischung die restlichen Gewichts-% beträgt, die durch Subtraktion der Konzentration des Kohlendioxids von der Kühlmittelmischung erhalten wird.

2. Kühlmittelmischung gemäß Anspruch 1, **dadurch gekennzeichnet, dass** der Kühlmittelmischung ein Leckerkennungsadditiv in Form eines Odorier- oder Färbemittels zugegeben wird.

3. Kältekreislaufvorrichtung, die die Kühlmittelmischung gemäß Anspruch 1 oder 2 verwendet.

4. Kältekreislaufvorrichtung gemäß Anspruch 3, **dadurch gekennzeichnet, dass** ein Verdichter, ein Verflüssiger, eine Ausdehnungsvorrichtung und ein Verdampfer miteinander in einer Ringform verbunden sind, um einen Kältekreislauf zu bilden, wobei eine Kühlmittelmischung durch den Verflüssiger strömt und ein nicht erwärmtes Fluid derart strömen kann, dass sie einander entgegenwirkend sind, wodurch Wärme ausgetauscht wird.

5. Kältekreislaufvorrichtung gemäß Anspruch 4, **dadurch gekennzeichnet, dass** ein Gas-Flüssigkeitsabscheider zwischen einem Auslass der Ausdehnungsvorrichtung und einem Einlass des Verdampfers bereitgestellt ist, wobei die Kühlmittelmischung durch den Gas-Flüssigkeitsabscheider in eine Gasphasenkühlmittelmischung und eine Flüssigphasenkühlmittelmischung getrennt wird, eine Leitung des Gas-Flüssigkeitsabscheider mit dem Verdampfer derart verbunden ist, dass die Flüssigphasenkühlmittelmischung in den Verdampfer strömt, und eine Leitung des Gas-Flüssigkeitsabscheider mit einer Ansaugleitung des Verdichters derart verbunden ist, dass die Gasphasenkühlmittelmischung in die Ansaugleitung des Verdichters strömt.

6. Kältekreislaufvorrichtung gemäß Anspruch 4 oder 5, **dadurch gekennzeichnet, dass** ein Schmiermittel, das unter einem Betriebszustand des Verdichters in der Kühlmittelmischung gelöst ist und eine Viskosität von 2 cm Stokes oder mehr aufweist, als ein in den Verdichter zu dosierendes Schmiermittel verwendet wird.

7. Kältekreislaufvorrichtung gemäß Anspruch 4 oder 5, **dadurch gekennzeichnet, dass** ein Niederdruckverdichter als Verdichter verwendet wird.

## Revendications

1. Mélange réfrigérant, **caractérisé en ce que** ledit mélange réfrigérant comprend de l'isobutane et du dioxyde de carbone, la concentration de dioxyde de carbone dans la totalité du mélange réfrigérant est de 60 % ou moins en poids, et la concentration d'isobutane dans la totalité du mélange réfrigérant est le pourcentage restant en poids obtenu en soustrayant ladite concentration de dioxyde de carbone dudit mélange réfrigérant.

2. Mélange réfrigérant selon la revendication 1, **caractérisé en ce qu'**un additif de détection de fuite d'agent odorant ou colorant est ajouté au mélange réfrigérant.

3. Appareil à cycle frigorifique utilisant le mélange réfrigérant selon la revendication 1 ou 2.

4. Appareil à cycle frigorifique selon la revendication 3, **caractérisé en ce qu'**un compresseur, un condensateur, un dispositif d'expansion et un évaporateur sont raccordés l'un à l'autre en boucle pour former un cycle frigorifique, un mélange réfrigérant s'écoulant à travers ledit condensateur et un fluide non chauffé étant autorisés à s'écouler de telle sorte qu'ils soient opposés l'un à l'autre, échangeant ainsi la chaleur.

5. Appareil à cycle frigorifique selon la revendication 4, **caractérisé en ce qu'**un séparateur gaz-liquide est disposé entre une sortie dudit dispositif d'expansion et une entrée dudit évaporateur, ledit mélange réfrigérant est séparé par ledit séparateur gaz-liquide en mélange réfrigérant en phase gazeuse et en mélange réfrigérant en phase liquide, un tuyau dudit séparateur gaz-liquide est raccordé audit évaporateur, de telle sorte que ledit mélange réfrigérant en phase liquide s'écoule dans ledit évaporateur, et un tuyau dudit séparateur gaz-liquide est raccordé à une conduite d'aspiration dudit compresseur, de telle sorte que ledit mélange réfrigérant en phase gazeuse s'écoule dans ladite conduite d'aspiration dudit compresseur.

6. Appareil à cycle frigorifique selon la revendication 4 ou 5, **caractérisé en ce qu'**un lubrifiant dissous dans ledit mélange réfrigérant dans un état de fonctionnement dudit compresseur, et d'une viscosité de 2 cm stokes ou plus est utilisé comme lubrifiant pour être chargé dans ledit compresseur.

7. Appareil à cycle frigorifique selon la revendication 4 ou 5, **caractérisé en ce qu'**un compresseur du type à basse pression est utilisé comme ledit compresseur.
